(19) Europäisches Patentamt
European Patent Office
Office européen des brevets

(11) **EP 1 376 455 B1**

(12) **EUROPÄISCHE PATENTSCHRIFT**

(45) Veröffentlichungstag und Bekanntmachung des Hinweises auf die Patenterteilung:
**16.06.2010 Patentblatt 2010/24**

(51) Int Cl.:
***G06K 17/00*** *(2006.01)*   ***G07F 7/10*** *(2006.01)*

(21) Anmeldenummer: **03009646.5**

(22) Anmeldetag: **30.04.2003**

(54) **Verfahren und Vorrichtung zur Steuerung eines Terminals für Chipkarten-Transaktionen**

Method and device for controlling a chipcard transaction terminal

Procédé et dispositif pour le contrôle d'un terminal pour cartes à puce

(84) Benannte Vertragsstaaten:
**AT BE BG CH CY CZ DE DK EE ES FI FR GB GR HU IE IT LI LU MC NL PT RO SE SI SK TR**

(30) Priorität: **18.06.2002 DE 10227220**
**19.07.2002 DE 10232744**

(43) Veröffentlichungstag der Anmeldung:
**02.01.2004 Patentblatt 2004/01**

(73) Patentinhaber: **TeleCash Kommunikations-Service GmbH**
**70174 Stuttgart (DE)**

(72) Erfinder:
• **Albrecht, Norbert, Dipl.-Ing.**
**16341 Panketal (DE)**
• **Hanft, Dieter**
**72574 Bad Urach (DE)**
• **Härterich, Martin**
**72108 Rottenburg (DE)**
• **Kubo, Takayuki, Dr.**
**12435 Berlin (DE)**
• **Kulak, Thorsten, Dipl.-Phys**
**10247 Berlin (DE)**
• **Zimmermann, Uwe**
**74405 Gaildorf (DE)**

(74) Vertreter: **Beyer, Andreas et al**
**Wuesthoff & Wuesthoff**
**Patent- und Rechtsanwälte**
**Schweigerstrasse 2**
**81541 München (DE)**

(56) Entgegenhaltungen:
**DE-A- 19 716 861    US-A- 5 025 373**

• **RANKL WOLFGANG ET AL: "Handbuch der Chipkarten" , HANDBUCH DER CHIPKARTEN. AUFBAU - FUNKTIONSWEISE - EINSATZ VON SMART CARDS, MUENCHEN: CARL HANSER VERLAG, DE, PAGE(S) 595-612 XP002174265 ISBN: 3-446-21115-2 * Seite 598 * * Seite 606 - Seite 611 ***
• **"EMV 96 Integrated Circuit Card Terminal Specification for Payment Systems" [Online] 31. Mai 1998 (1998-05-31) , EMV XP002249715 Gefunden im Internet: <URL: www.emvco.com> [gefunden am 2003-07-25] Seiten I3 - I5, II1 - II11 * Seite II-5, Absatz 1.5 ***

**Beschreibung**

Die Erfindung betrifft eine Anordnung zur Durchführung von Chipkarten-Transaktionen, insbesondere eines nach dem EMV-Standard. Insbesondere umfasst die Erfindung die verteilte Abarbeitung des Programms.

Gebiet der Erfindung:

Derartige Anordnungen dienen vorwiegend zur Abarbeitung von Kartenzahlungen. Hierbei werden Karten in ein Kartenlesegerät eingeschoben und entweder der Chip oder der Magnetstreifen ausgelesen, um dann anhand von weiteren Daten, insbesondere über eine Tastatur eingegebenen Daten zu überprüfen, ob eine Zahlung ausgeführt werden kann oder nicht.

Stand der Technik (SdT):

Bei einer bekannten Anordnung der eingangs genannten Art erfolgt die Abarbeitung und Überprüfung der Schlüssel (private und öffentliche) insbesondere durch das RSA-Verfahren durch eine dynamische oder statische Authentifizierung. Hierbei wird im Einzelfall eine Verbindung zu einem zentralen Rechner aufgebaut, um spezifische Informationen herunterzuladen oder zu bestätigen.

Aus der DE 197 16 861 A1 ist eine Verschlüsselungsvorrichtung und ein entsprechendes Verfahren bekannt. Hierbei arbeitet ein PC bzw. der Prozessor als Verschlüsselungsvorrichtung. Die Kryptohardware ist dabei die Chipkarte oder eine PCMCIA Karte.

Aus der US 5025373 ist ein Verfahren bekannt, bei dem ein tragbares TerminalSystem mit einem Host-Computer verbunden ist, der alle Berechnungen durchführt.

Aus der EMV 96 ist die Spezifikation eines integrierten Circuit Card Terminals bekannt.

Aus dem Handbuch der Chipkarten sind unterschiedliche Arten von Terminals bekannt, die entweder voll integriert sind, d.h. alle Aufgaben selber übernehmen, oder "dumm" sind, d. h. die Aufgaben vollständig an einen Server übergeben.

Problematisch bei dieser Vorrichtung ist, dass regelmäßige Software-Updates auf den Terminals notwendig sind, um neue Programme und Algorithmen zu implementieren.

Aufgabe der Erfindung ist es, ein einfaches Terminal bereitzustellen, das die gleiche Sicherheit bietet wie ein bekanntes, wobei jedoch ein Updateprozess nicht notwendig ist.

Diese Aufgabe wird durch die Erfindung mit den Merkmalen des unabhängigen Anspruchs gelöst.

Erfindungsgemäß ist eine Anordnung zur Durchführung von Chipkartentransaktionen vorgesehen, die ein Terminal mit einem Kartenleser, einem Anwendungsprozessor und einem Sicherheitsprozessor sowie einen mit dem Terminal über ein Netzwerk kommunizierenden Rechner umfasst, gekennzeichnet dadurch, dass der Rechner ein gesichertes Programm für die Durchführung im Rahmen einer Kartentransaktion anfallender kryptografischer Berechnungen enthält, wobei das Terminal oder/und der Rechner dazu eingerichtet ist, abhängig von der Komplexität oder Häufigkeit einer kryptografischen Berechnung die Durchführung derselben auf dem Terminal oder dem Rechner zu veranlassen.

In einem Verfahren zur Steuerung der Abarbeitung eines Chipkarten-Programmes, insbesondere eines nach dem EMV-Standard, mit einer Chipkarte, mit einem Kartenterminal, mit einem mit dem Kartenterminal durch ein Netzwerk verbundenen Rechner, ist der Rechner so eingerichtet, dass das Programm oder Segmente des Programms abgearbeitet werden können, wobei der Rechner den Ablauf des Programms steuert, indem Aktionen des Terminals angestoßen werden und über das Terminal Informationen zwischen der Chipkarte und dem Rechner ausgetauscht werden.

Der Rechner ist ein durch ein Netzwerk, insbesondere eine Telefonleitung, verbundener Computer, der mit einer Software versehen ist, die eine Abarbeitung des Chipkarten-Programmes erlaubt. In einer bevorzugten Ausführungsform ist die Hardware auf Verschlüsselung, insbesondere nach dem RSA-Standard spezialisiert. Dieses Programm ist gesichert, sodass eine Manipulation ausgeschlossen werden kann, wenn ein Chipkartenprogramm oder Segmente davon abgearbeitet werden.

Je nach Komplexität der Verschlüsselung und Häufigkeit des Durchlaufs eines Algorithmus kann entschieden werden, ob eine Ausführung auf dem Terminal, soweit dies dazu in der Lage ist, oder auf dem Endgerät stattfinden soll. Eine Entscheidung, ob Programme durch den Rechner ausgeführt werden sollen, können von der Auslastung, der Komplexität, und der Kompatibilität des Kartenterminals abhängig gemacht werden. So kann weiter unten entnommen werden, dass in einigen Fällen eine oder mehrfache Berechnungen notwendig sind. Hierbei ist immer das Verhältnis zu berücksichtigen, in dem die Übertragungsdauer zum Zeitaufwand der Berechnung steht.

In einer bevorzugten Ausführungsform sind Mittel vorhanden, die eine Prüfung der Ausführung der Befehle vornehmen. Um sicherzustellen, dass die Abarbeitung eines Befehls erfolgreich war, wird dieser quittiert und durch eine einfache Logik überprüft, wobei das Kartenterminal oder der Rechner eine Überprüfung vornehmen. Nicht ausgeführte Befehle werden erneut verteilt, um sie erneut auszuführen. Hierbei kann eine alternative Verbindung zu anderen Rechner aufgebaut werden, wenn ein Fehler auftritt, insbesondere dahingehend, dass ein Befehl nicht korrekt quittiert wurde.

Der beschriebene Rechner zur Abarbeitung eines Chipkarten-Programmes, insbesondere eines nach dem EMV-Standard, besitzt eine Netzwerkverbindung mit einem Kartenterminal, insbesondere eine Wählverbindung. Der Rechner umfasst eine Einrichtung, die das Chipkarten-Programm oder Segmente des Programms abarbeitet, wobei der Rechner den Ablauf des Programms steuert, indem Aktionen des Terminals angestoßen werden und über das Terminal Informationen zwischen der Chipkarte und dem Rechner ausgetauscht werden. Soweit keine Verbindung besteht baut das Terminal beim Einschieben einer entsprechenden Karte eine Verbindung mit dem Rechner auf, der dann die Kontrolle über die weiteren Aktionen übernimmt.

In der bevorzugten Ausführungsform handelt sich um einen Rechner, der mit einer Software versehen ist, die die Funktionalität implementiert.

Im Folgenden wird die Erfindung anhand von Ausführungsbeispielen näher erläutert, die in den Figuren schematisch dargestellt sind. Gleiche Bezugsziffern in den einzelnen Figuren bezeichnen dabei gleiche Elemente. Im Einzelnen zeigt:

Fig. 1     den Ablauf einer Transaktion durch das Terminal;

Fig. 2     den Ablauf einer Transaktion durch einen Rechner, der durch eine Wählverbindung mit dem Terminal verbunden ist;

Fig. 3     den Ablauf einer Transaktion, wobei im Ping-Pong-Stil, die Daten zwischen dem Rechner, dem Terminal und der Karte ausgetauscht werden.

Im Rahmen der Erfindung sind zahlreiche Abwandlungen und Weiterbildungen der beschriebenen Ausführungsbeispiele verwirklichbar.

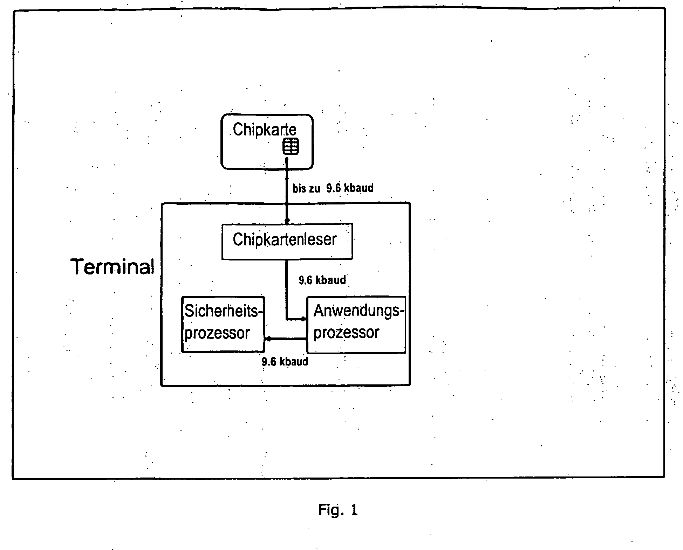

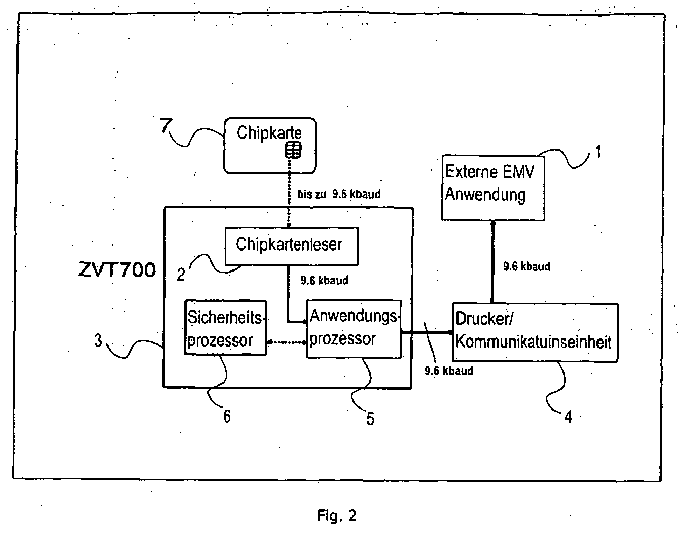

Die Figuren 1 und 2 zeigen das momentane (Stand der Technik) und das erfindungsgemäße System. Hierbei wird sich im vorliegenden Fall nur auf Informationen konzentriert, die ausgetauscht werden um Verschlüsselungen und Entschlüsselungen zu berechnen (RSA).

Prozesse, bei denen Messages ausgetauscht werden, sind im vorliegenden Fall nicht berücksichtigt worden. Es wird angenommen, dass ein Großteil der Transaktionszeit für den Austausch von Daten benötigt wird das Beispiel konzentriert sich daher für einen Vergleich ausschließlich auf diesen Austausch der Hauptdaten, unter Vernachlässigung anderer Zeiten, z. B. der Berechnung von Unterschriften. Es ist prinzipiell möglich, nicht nur die durch EMV definierten Daten auszutauschen, sondern auch weitere Funktionen wie die Nachrichtenaufbereitung für Autorisierungsstellen auf den Rechner auszulagern, da angenommen wird, dass ein Großteil der Zeit für den Austausch von Informationen verwendet wird. Sollte hingegen ein schnelles Netzwerk vorliegen, so kann ebenfalls die Bearbeitung von Messages ausgelagert werden.

Es wird deutlich, dass in Fig. 2 über eine Kommunikationseinheit 2 und 4 eine Verbindung mit dem externen Rechner 1 aufgebaut wird, der dem EMV-Standard entspricht. Das Terminal umfasst einen Sicherheitsprozessor 6 und einen Anwendungsprozessor 5. Durch die Erfindung wird somit der Sicherheitsprozessor 6 im Terminal 3 nicht verwendet, wenn alle Aufgaben durch den externen Rechner durchgeführt werden. Durch das Terminal wird eine Chipkarte 7 gelesen.

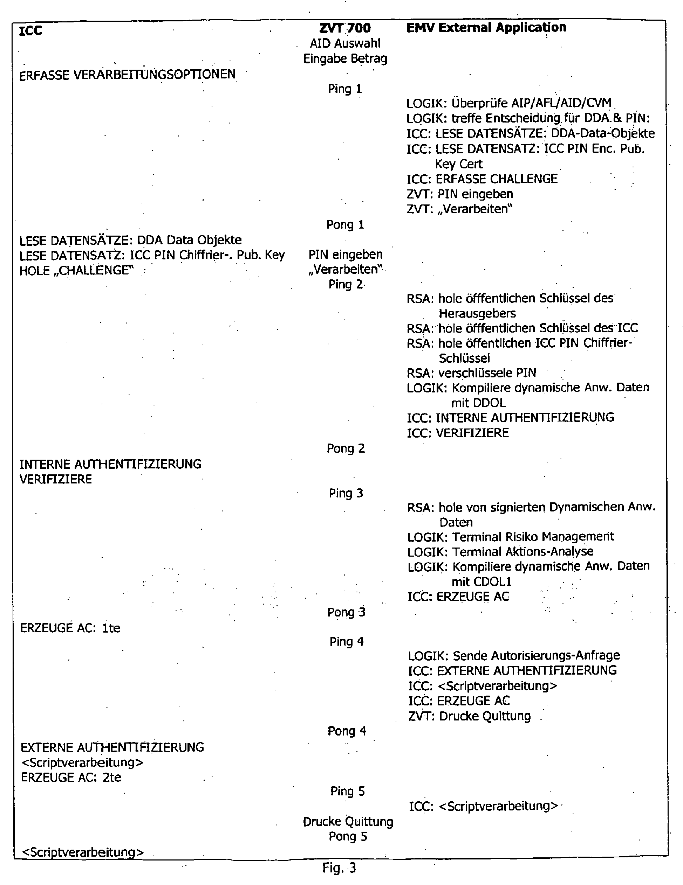

Die Fig. 3 zeigt, wie das externe EMV-Programm, das auf dem externen Rechner läuft, die Anwendung und die Bearbeitung in Ping-Pong-förmige Kommunikationsschritte umwandelt. Das Beispiel wird für einen ZVT 700 Hardware (Terminal) beschrieben mit sehr schlechter Performance. Es wird jedoch darauf hingewiesen, dass andere Terminals ebenfalls genutzt werden können.

Im vorliegenden Beispiel werden eine dynamische Data Authentifikation (DDA) und eine PIN Identifikation parallel durchgeführt, um Zeit zu sparen. Es scheint so, als wurde die EMV- Spezifikation einen solchen Mix erlauben. Die rechte Seite zeigt den externen Rechner, auf den die EMV-Anwendung läuft mit RSA-Operationen und Kommandos, die entweder zum Terminal oder der Chipkarte (ICC) gesendet werden. Die mittlere Spalte des Diagramms zeigt die Kommandos, die auf dem Terminal ausgeführt werden. Die linke Seite des Diagramms zeigt Kommandos, die auf der Chipkarte ausgeführt werden.

So wird beim ersten Schritt eine Überprüfung von AIP/AFL/AID/CVM durchgeführt, um sich dann für DDA und PIN zu entscheiden (DDA: Dynamic Data Authentication). Nun wird das Kommando an die Chipkarte gesendet, bei dem DDA-Data-Objekte, ICC PIN Enc, Pub. Key Cert gelesen werden sollen. Das Terminal soll den PIN vom Benutzer abfragen und diesen senden. Im nächsten Schritt werden RSA-Operationen durchgeführt. So wird zum Beispiel der PIN entschlüsselt. Weitere interessante Aspekte findet man im vierten Schritt, bei dem das Terminal angesprochen wird, eine Quittung zu erzeugen. Aufgrund der vielen Kompiliervorgange und Verschlüsselungsvorgänge ist die Ausführung sehr effizient und ein Terminal ausgesprochen günstig.

Es sei daraufhingewiesen, dass die beschriebenen Varianten nicht ausschließlich für den EMV-Standard [1] gedacht sind. Eine bevorzugte Anwendung dieses Standards ist jedoch gegeben, da ein Großteil aller Chipkarten auf ihm basieren.

Um zu verstehen, wie asymmetrische Algorithmen, wie der RSA, im EMV-Standard verwendet werden, ist folgende Funktion zu berücksichtigen. Wenn S der private Schlüssel ist und P der zugeordnete öffentliche, dann kann die Abhängigkeit der Signatur und deren Wiederherstellungsfunktionen wie folgt beschrieben werden:

$$\text{Rec (P)}[\text{sig(S)}[M]] = M = \text{sig(S)}(\text{Rec (P)}[M])$$

Sowohl das Terminal/Rechner als auch die Chipkarte verwenden ihren eigenen Algorithmus; die Chipkarte verwendet den Signaturalgorithmus, das Terminal/Rechner den Wiederherstellungsalgorithmus (Recovery). Das Terminal/Rechner kann jegliche Signatur oder andere Verschlüsselungen überprüfen, die durch die Chipkarte und ihren privaten Schlüssel erzeugt wurden, indem der entsprechende öffentliche Schlüssel verwendet wird. Entsprechend kann die Chipkarte vertrauliche Daten entschlüsseln, die durch das Terminal/Rechner und den öffentlichen Schlüssel verschlüsselt wurden, indem der entsprechende private Schlüssel verwendet wird.

Auf dieser Grundlage gibt es die statische Authentifizierung (SDA). In diesem Falle werden kritische Daten, die auf der Chipkarte gespeichert sind, durch den privaten Schlüssel signiert. Das Kryptogramm wird somit auf der Karte gespeichert, um es dem Terminal zu übergeben, das die Authentizität der Karte überprüft. Die Daten, die zu signieren sind, werden von dem Herausgeber der Karte bestimmt.

Weiterhin gibt es die dynamische Authentifikation (DDA). Im Normalfall erzeugt das Terminal/Rechner eine Zufallszahl und sendet sie mit anderen Informationen zur Chipkarte, wo sie durch den privaten Schlüssel signiert wird. Diese Signatur wird durch das Terminal/Rechner geprüft. Die dritte Offline-Authentifikation ist DDA kombiniert mit einer application cryptogramm generation (Erzeugung eines Kryptogramms).

In diesem Falle werden dynamische Daten des Terminals und der Chipkarte durch die Chipkarte genutzt, um ein application cryptorgram zu erzeugen, wobei 3DES (MAC generation) verwendet wird. Diese Informationen sind i. d. R. unvorhersehbare Zahlen, Transaktionszahlen, Länderkennung und Chipkarten-Daten, wie der Applikationstransaktions-Zähler, wobei dieses Kryptogramm durch den privaten Schlüssel der Chipkarte signiert wird und im Folgenden durch das Terminal/Rechner überprüft wird.

In Abhängigkeit der Aufgaben, sind somit bei einem normalen Ablauf einer Transaktion, d.h. ohne Wiederholung, bis zu fünf RSA-Kalkulationen notwendig. Dies liegt insbesondere dann vor, wenn DDA mit einem offline-verschlüsselten PIN mit dem öffentlichen Schlüssel der Chipkarte vorliegt. Genaue Details sind der Literatur [1] zu entnehmen. Genau in diesem Falle ist es von großem Vorteil, wenn die Kalkulationen ausgelagert werden.

Liste der zitierten Literatur:

[1] EMV Spezifikationen (www.emvco.com)

Buch 1 - "Application independent ICC to Terminal Interface requirements"

Diese Spezifikation beschreibt die minimale Funktionalität, die für Chipkarten (ICCs) und Terminals benötigt wird, um einen korrekten Betrieb und eine korrekte Zusammenarbeit unabhängig, von der zu verwendenden Anwendung zu gewährleisten.

Buch 2 - "Security and Key Management"

Diese Spezifikation beschreibt die minimale Sicherheitsfunktionalität, die für Chipkarten (ICCs) und Terminals benötigt wird, um einen korrekten Betrieb und eine korrekte Zusammenarbeit zu gewährleisten. Zusätzliche Anforderungen und Empfehlungen werden im Hinblick auf die Online-Kommunikation zwischen ICC und Herausgeber und der Verwaltung des kryptografischen Schlüssels auf Terminal-, Herausgeber- und Bezahlsystemebene angegeben.

Buch 3 - "Application Specification"

Diese Spezifikation legt die Terminal- und Chipkarten- (ICC) Arbeitsverfahren fest, die nötig sind, um eine Bezahlsystemtransaktion in einer internationalen Geldverkehrsumgebung zu erbringen.

Buch 4 - "Cardholder, Attendant, and Acquirer Interface Requirements"

Dies legt die obligatorischen, die empfohlenen und die optionalen Anforderungen fest, die nötige sind, um die Akzeptanz von Chipkarten (ICCs) in Übereinstimmung mit "Application independent ICC to Terminal Interface requirements" (Buch 1), "Security and Key Management" (Buch 2) und "Application Specification" (Buch 3) zu fördern.

"Analysis of EMV2000 Changes for backwards compatibility"

Dieses Dokument listet alle wesentlichen Veränderungen von EMV' 96 zu EMV2000 und ihre zu erwartenden Auswirkungen auf.

## Patentansprüche

1. Anordnung zur Durchführung von Chipkartentransaktionen, umfassend ein Terminal (3) mit einem Kartenleser, einem Anwendungsprozessor (5) und einem Sicherheitsprozessor (6) und einen mit dem Terminal (3) über ein Netzwerk kommunizierenden Rechner (1), **gekennzeichnet dadurch, dass** der Rechner ein gesichertes Programm für die Durchführung im Rahmen einer Kartentransaktion anfallender kryptografischer Berechnungen enthält, wobei das Terminal (3) oder/und der Rechner (1) dazu eingerichtet ist, abhängig von der Komplexität oder Häufigkeit einer kryptografischen Berechnung die Durchführung derselben auf dem Terminal (3) oder dem Rechner (1) zu veranlassen.

## Claims

1. System for performing chip card transactions, comprising a terminal (3) having a card reader, an application processor (5) and a security processor (6) and a computer (1) communicating with the terminal (3) via a network, **characterized in that** the computer includes a secured program for performing cryptographic calculations to be executed in the course of a card transaction, wherein the terminal (3) or/and the computer (1) is configured to cause, depending on the complexity or frequency of occurrence of a cryptographic calculation, the execution of the same on the terminal (3) or the computer (1).

## Revendications

1. Dispositif permettant l'exécution de transactions par carte à puce, comprenant un terminal (3) muni d'un lecteur de carte, d'un processeur d'application (5) et d'un processeur de sécurité (6) ainsi que d'un ordinateur (1) communiquant sur réseau avec ledit terminal (3), **caractérisé en ce que** l'ordinateur contient un programme sécurisé pour l'exécution des calculs cryptographiques à effectuer dans le cadre d'un transaction par carte, ledit terminal (3) ou/et ledit ordinateur (1) étant conçus pour faire exécuter un calcul cryptographique sur le terminal (3) ou sur l'ordinateur (1), selon la complexité et la fréquence dudit calcul à effectuer.

EP 1 376 455 B1

Chipkarte

bis zu 9.6 kbaud

Chipkartenleser

9.6 kbaud

Terminal

Sicherheitsprozessor

Anwendungsprozessor

9.6 kbaud

Fig. 1

Fig. 2

| ICC | ZVT 700 | EMV External Application |
|---|---|---|
| | AID Auswahl | |
| | Eingabe Betrag | |
| ERFASSE VERARBEITUNGSOPTIONEN | | |
| | Ping 1 | |
| | | LOGIK: Überprüfe AIP/AFL/AID/CVM |
| | | LOGIK: treffe Entscheidung für DDA & PIN: |
| | | ICC: LESE DATENSÄTZE: DDA-Data-Objekte |
| | | ICC: LESE DATENSATZ: ICC PIN Enc. Pub. Key Cert |
| | | ICC: ERFASSE CHALLENGE |
| | | ZVT: PIN eingeben |
| | | ZVT: „Verarbeiten" |
| | Pong 1 | |
| LESE DATENSÄTZE: DDA Data Objekte | | |
| LESE DATENSATZ: ICC PIN Chiffrier-. Pub. Key | PIN eingeben | |
| HOLE „CHALLENGE" | „Verarbeiten" | |
| | Ping 2 | |
| | | RSA: hole öffentlichen Schlüssel des Herausgebers |
| | | RSA: hole öffentlichen Schlüssel des ICC |
| | | RSA: hole öffentlichen ICC PIN Chiffrier-Schlüssel |
| | | RSA: verschlüssele PIN |
| | | LOGIK: Kompiliere dynamische Anw. Daten mit DDOL |
| | | ICC: INTERNE AUTHENTIFIZIERUNG |
| | | ICC: VERIFIZIERE |
| | Pong 2 | |
| INTERNE AUTHENTIFIZIERUNG | | |
| VERIFIZIERE | | |
| | Ping 3 | |
| | | RSA: hole von signierten Dynamischen Anw. Daten |
| | | LOGIK: Terminal Risiko Management |
| | | LOGIK: Terminal Aktions-Analyse |
| | | LOGIK: Kompiliere dynamische Anw. Daten mit CDOL1 |
| | | ICC: ERZEUGE AC |
| | Pong 3 | |
| ERZEUGE AC: 1te | | |
| | Ping 4 | |
| | | LOGIK: Sende Autorisierungs-Anfrage |
| | | ICC: EXTERNE AUTHENTIFIZIERUNG |
| | | ICC: <Scriptverarbeitung> |
| | | ICC: ERZEUGE AC |
| | | ZVT: Drucke Quittung |
| | Pong 4 | |
| EXTERNE AUTHENTIFIZIERUNG | | |
| <Scriptverarbeitung> | | |
| ERZEUGE AC: 2te | | |
| | Ping 5 | |
| | | ICC: <Scriptverarbeitung> |
| | Drucke Quittung | |
| | Pong 5 | |
| <Scriptverarbeitung> | | |

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19716861 A1
- US 5025373 A